# EUROPÄISCHE PATENTANMELDUNG

(11) **EP 1 990 246 A1**
(43) Veröffentlichungstag der Anmeldung: **12.11.2008**
(21) Anmeldenummer: 07009416.4
(22) Anmeldetag: 10.05.2007
(51) Int. Cl.: B60R 21/231, B60R 21/233

(54) **Luftsackanordnung mit einem Soft-Diffusor innerhalb einer Gasleitung**

(71) Anmelder: Delphi Technologies, Inc., Troy, Michigan 48007 (US)
(72) Erfinder: Guthke, Detlev, 58089 Hagen (DE); Maiwald, Helmut, 51515 Kürten (DE)
(74) Vertreter: Manitz, Finsterwald & Partner GbR

(57) **Zusammenfassung**

Die Erfindung betrifft eine Luftsackanordnung für Kraftfahrzeuge mit wenigstens einem aufblasbaren Luftsack (11) und zumindest einer Gasleitung (13), an die der Luftsack angeschlossen und über die der Luftsack mittels eines im am Fahrzeug montierten Zustand entfernt von dem Luftsack angeordneten Gasgenerators (14) aufblasbar ist, wobei zwischen der Gasleitung und wenigstens einer weiteren Komponente, die von dem Luftsack, einem Anschlussstück (17) oder einem weiteren Gasleitungsstück gebildet ist, eine gasdichte Verbindung besteht, die von einem Verbindungsabschnitt (23) der Gasleitung und einem Verbindungsabschnitt (27) der weiteren Komponente gebildet ist, wobei die Verbindungsabschnitte (23,27) jeweils derart, insbesondere flexibel, biegsam und/oder weich, ausgebildet sind, dass sie unter dem Einfluss von mittels des Gasgenerators freigegebenem Gas aus einer flachen Montagekonfiguration in eine Aufblaskonfiguration mit gegenüber der Montagekonfiguration vergrößertem Strömungsquerschnitt gelangen können.

## Beschreibung

Die Erfindung betrifft eine Luftsackanordnung für Kraftfahrzeuge mit wenigstens einem aufblasbaren Luftsack und mit einer Gasleitung, an die der Luftsack angeschlossen und über die der Luftsack mittels eines im am Fahrzeug montierten Zustand entfernt von dem Luftsack angeordneten Gasgenerators aufblasbar ist.

Derartige Luftsackanordnungen sind insbesondere dann von Interesse, wenn der Gasgenerator nicht in unmittelbarer Nähe zum Luftsack angeordnet werden kann oder soll. Durch die zwischen dem Gasgenerator und dem Luftsack vorgesehene Gasleitung ergibt sich prinzipiell eine höhere Flexibilität bei der Konzeption und Montage der Luftsackanordnung im Fahrzeug.

Problematisch ist, dass für die Gasleitung zusätzlicher Platz im Fahrzeug benötigt wird. Außerdem sind spezielle gasdichte Anbindungen der Gasleitung einerseits an den Luftsack und andererseits an den Gasgenerator erforderlich, was einen konstruktiven Mehraufwand mit sich bringen und sich nachteilig hinsichtlich der Herstellungskosten auswirken kann.

Aufgabe der Erfindung ist es, eine Luftsackanordnung der eingangs genannten Art derart weiterzubilden, dass sie bei möglichst geringem Auf wand und niedrigen Kosten bei der Herstellung vielseitig einsetzbar und Platz sparend im Fahrzeug montierbar ist.

Die Lösung dieser Aufgabe erfolgt durch die Merkmale des Anspruchs 1.

Erfindungsgemäß ist zwischen der Gasleitung und wenigstens einer weiteren Komponente der Luftsackanordnung, bei der es sich um den Luftsack, um ein Anschlussstück oder um ein weiteres Gasleitungsstück handeln kann, eine gasdichte Verbindung vorgesehen, die von einem Verbindungsabschnitt der Gasleitung und einem Verbindungsabschnitt der weiteren Komponente gebildet wird. Dabei sind die Verbindungsabschnitte jeweils derart, insbesondere flexibel, biegsam und/oder weich, ausgebildet, dass sie unter dem Einfluss von mittels des Gasgenerators freigegebenem Gas aus einer flachen Montagekonfiguration in eine Aufblaskonfiguration mit gegenüber der Montagekonfiguration vergrößertem Strömungsquerschnitt gelangen können.

Eine derartige flexible, biegsame und/oder weiche Verbindung benötigt im Montagezustand aufgrund ihrer dann flachen und somit gewissermaßen zweidimensionalen Konfiguration extrem wenig Platz. Im Bedarfsfall ergibt sich der erforderliche Strömungsquerschnitt für das Gas durch die Wirkung des Gasgenerators gewissermaßen automatisch von selbst, indem der Gasgenerator die Verbindung aus der flachen Montagekonfiguration in die Aufblaskonfiguration überführt, insbesondere aufbläst, entfaltet, aufdrückt oder aufweitet, was erfindungsgemäß durch die flexible, biegsame und/oder weiche Ausgestaltung der Verbindungsabschnitte ermöglicht wird.

Die erfindungsgemäße Verbindung ist insofern universell einsetzbar, als sie zwischen unterschiedlichen Komponenten der Luftsackanordnung verwendet werden kann. Beispielsweise kann sowohl die Verbindung zwischen der Gasleitung und dem Luftsack selbst als auch die Verbindung zwischen der Gasleitung und einem weiteren Gasleitungsstück oder einem Anschlussstück in erfindungsgemäß flexibler Weise ausgebildet werden.

Bei dem Anschlussstück handelt es sich insbesondere um eine Komponente, die im Bereich der Anbindung des Gasgenerators an die Gasleitung zum Einsatz kommt und insbesondere dazu dient, in diesem Bereich die Gasdichtigkeit zwischen Gasgenerator und Gasleitung herzustellen. Mittels eines oder mehrerer weiterer Gasleitungsstücke, die in erfindungsgemäßer Weise mit der zu dem Luftsack führenden Gasleitung verbunden werden, lassen sich prinzipiell beliebig verzweigte Gasleitungssysteme realisieren, bei denen die gasdichten Verbindungen der einzelnen Komponenten untereinander aufgrund der erfindungsgemäßen flexiblen, biegsamen und/oder weichen Ausgestaltung besonders Platz sparend im Fahrzeug untergebracht werden können.

Besonders vorteilhaft kann die erfindungsgemäße Verbindung im Zusammenhang mit einer Gasverteilung eingesetzt werden, die insbesondere in Anwendungen zum Einsatz kommen kann, bei denen mit einem Gasgenerator gleichzeitig zwei Luftsäcke aufgeblasen werden sollen oder - allgemein ausgedrückt - die Anzahl von zur Verfügung stehenden Gasquellen kleiner ist als die Anzahl von im Fahrzeug räumlich getrennt voneinander anzuordnenden Luftsäcken.

Es hat sich überraschend herausgestellt, dass ein erfindungsgemäßer, insbesondere von der erfindungsgemäßen Verbindung Gebrauch machender Gasverteiler an einen einzigen Gasauslass eines Gasgenerators angeschlossen und dazu verwendet werden kann, das von dem Gasgenerator freigegebene Gas gleichzeitig zwei räumlich voneinander getrennt angeordneten Luftsäcken zuzuführen, um die Luftsäcke gleichzeitig aufzublasen. Dabei wurde gefunden, dass auch bei nicht exakt symmetrischem Aufbau des Gasleitungssystems das von dem Gasgenerator freigegebene Gas im Wesentlichen gleichmäßig auf die beiden Luftsäcke verteilt werden kann. Insbesondere treten keine störenden Effekte dergestalt auf, dass das von dem Gasgenerator freigegebene Gas überwiegend zu lediglich einem der beiden Luftsäcke strömt, was zu einem in der Praxis nicht akzeptierbaren ungleichmäßigen Aufblasen der beiden Luftsäcke führen würde. Dies lässt sich vermutlich auf die hohe Dynamik der beim Auslösen eines Gasgenerators freigegebenen Gasströmung zurückführen.

Vor diesem Hintergrund wird gemäß einem weiteren Aspekt der Erfindung unabhängig Schutz beansprucht für eine Luftsackanordnung mit wenigstens zwei in am Fahrzeug montierten Zustand entfernt voneinander angeordneten Luftsäcken und mindestens einem Gasgenerator zum gleichzeitigen Aufblasen der Luftsäcke, wobei die Luftsäcke an einen gemeinsamen Gasauslass des Gasgenerators angeschlossen sind.

Dabei kann vorgesehen sein, dass der Gasgenerator einen, insbesondere als Diffusor ausgebildeten, Verteilerabschnitt umfasst, über den das Gas gleichzeitig in wenigstens zwei unterschiedliche, insbesondere einander entgegengesetzte, Richtungen strömen kann, wobei der Verteilerabschnitt des Gasgenerators in einem Gasleitungssystem angeordnet ist, an das die beiden Luftsäcke angeschlossen sind, wobei das Gasleitungssystem derart, insbesondere flexibel, biegsam und/oder weich, ausgebildet ist, dass es unter dem Einfluss von mittels des Gasgenerators freigegebenem Gas aus einer flachen Montagekonfiguration in eine Aufblaskonfiguration mit gegenüber der Montagekonfiguration vergrößertem Strömungsquerschnitt gelangen kann.

Ferner kann dabei vorgesehen sein, dass der Verteilerabschnitt des Gasgenerators in einer, insbesondere durchgehenden und/oder einstückigen, Gasleitung angeordnet ist, welche die beiden Luftsäcke miteinander verbindet.

Ebenfalls unabhängig beansprucht wird gemäß einem weiteren Aspekt der Erfindung ein Gasleitungssystem für eine Kraftfahrzeug-Luftsackanordnung, die wenigstens einen Gasverteiler umfasst, der zumindest zwei Ausgänge, an die zwei im am Fahrzeug montierten Zustand entfernt voneinander angeordnete Luftsäcke anschließbar sind, und wenigstens einen Eingang aufweist, der an einen Gasgenerator zum gleichzeitigen Aufblasen der Luftsäcke anschließbar ist, wobei der Gasverteiler derart, insbesondere flexibel, biegsam und/oder weich, ausgebildet ist, dass er unter dem Einfluss von mittels des Gasgenerators freigegebenem Gas aus einer flachen Montagekonfiguration in eine Aufblaskonfiguration mit gegenüber der Montagekonfiguration vergrößertem Strömungsquerschnitt gelangen kann.

Dabei kann vorgesehen sein, dass der Gasverteiler einen, insbesondere als Diffusor ausgebildeten, Verteilerabschnitt umfasst, der an einen Gasauslass des Gasgenerators anschließbar oder mit einem Gasauslass des Gasgenerators verbunden ist und über den von dem Gasgenerator freigegebenes Gas gleichzeitig in wenigstens zwei unterschiedliche, insbesondere einander entgegengesetzte, Richtungen strömen kann.

Ferner kann vorgesehen sein, dass der Gasverteiler eine durchgehende Gasleitung umfasst, mit der die beiden Luftsäcke miteinander verbindbar sind, wobei der Verteilerabschnitt des Gasgenerators in der Gasleitung angeordnet ist.

Vorteilhafte Weiterbildungen der Erfindung sind in den abhängigen Ansprüchen, der Beschreibung sowie der Zeichnung angegeben. Diese Ausgestaltungen werden nicht nur in Verbindung mit der im unabhängigen Anspruch 1 angegebenen Luftsackanordnung offenbart und beansprucht, sondern - sofern technisch ausführbar - außerdem in Verbindung mit den anderen unabhängig beanspruchten Aspekten der Erfindung, wie sie insbesondere vorstehend erwähnt und in den unabhängigen Ansprüchen 28 und 32 angegeben sind.

Vorzugsweise wird zumindest ein Verbindungsabschnitt von einem flexiblen, biegsamen und/oder weichen röhren- oder schlauchartigen Gebilde und insbesondere von einem Schlauch gebildet. Insbesondere ist vorgesehen, dass die Gasleitung, das Anschlussstück und das weitere Gasleitungsstück jeweils im Wesentlichen als Ganzes von einem Schlauch gebildet werden.

Die Verbindungsabschnitte bzw. die Gasleitschläuche können aus einem Gewebe- oder Textilmaterial hergestellt sein. Insbesondere wird dasjenige Material oder ein gleichartiges Material verwendet, aus dem auch die Hülle des Luftsacks hergestellt ist oder hergestellt werden kann.

Es hat sich des Weiteren herausgestellt, dass es genügt, wenn die Verbindung ausschließlich von den flexiblen, biegsamen und/oder weichen Verbindungsabschnitten gebildet ist. Insbesondere ist es nicht erforderlich, zusätzliche starre oder steife Elemente z.B. zur Stabilisierung der Verbindung oder zur Umlenkung des aus dem Gasgenerator strömenden Gases einzusetzen. Vorzugsweise besteht das gesamte Gasleitungssystem aus im Sinne der Erfindung flexiblen, biegsamen und/oder weichen insbesondere schlauchartigen Gasleitungen.

Eine besonders einfache und kostengünstig herstellbare Verteilung des von einem einzigen Gasgenerator bereitgestellten Gases auf zwei im montierten Zustand räumlich voneinander entfernt angeordnete Luftsäcke kann gemäß einer weiteren Ausgestaltung der Erfindung dadurch realisiert werden, dass die beiden Luftsäcke mittels einer durchgehenden Gasleitung miteinander verbunden werden und der Anschluss des Gasgenerators an einem Zwischenabschnitt der Gasleitung erfolgt. Dieser Zwischenabschnitt ist dann Bestandteil einer erfindungsgemäßen flexiblen Verbindung bzw. eines erfindungsgemäßen flexiblen Gasverteilers.

Bei dem Gasgenerator handelt es sich vorzugsweise um einen schubneutral ausgeführten Gasgenerator. Erfindungsgemäß kann die Schubneutralität des Gasgenerators in geschickter Weise für eine Gasverteilung auf zwei räumlich voneinander getrennte Luftsäcke genutzt werden, indem ein insbesondere als Diffusor ausgebildeter Verteilerabschnitt des Gasgenerators, über den das Gas gleichzeitig in wenigstens zwei unterschiedliche, insbesondere einander entgegengesetzte, Richtungen strömen kann, in den erfindungsgemäßen flexiblen Gasverteiler und insbesondere in eine durchgehende, die beiden Luftsäcke miteinander verbindende Gasleitung, integriert wird.

Insbesondere kann der Verteilerabschnitt in einer die beiden räumlich voneinander getrennten Luftsäcke miteinander verbindenden, insbesondere durchgehenden, Gasleitung derart angeordnet werden, dass die einander entgegengesetzten Gasströmungsrichtungen des Verteilerabschnitts zumindest im Bereich der Anbindung des Gasgenerators an die Gasleitung mit der Längsachse der Gasleitung zumindest im Wesentlichen ausgerichtet sind. Der Verteilerabschnitt des Gasgenerators und die durchgehende Gasleitung bilden dann gemeinsam einen Gasverteiler zum gleichzeitigen Aufblasen der beiden Luftsäcke.

Die Verwendung einer durchgehenden Gasleitung in diesem Zusammenhang hat den Vorteil, dass beim Aufblasen der Luftsäcke die Kräfte, die durch das strömende Gas auf die Gasleitung einwirken, einander entgegengerichtet sind und sich somit gegenseitig aufheben. Auf diese Weise lässt sich erfindungsgemäß auf denkbar einfache Weise eine gewissermaßen schubneutrale Anbindung eines Gasgenerators an ein Gasleitungssystem oder an eine Verteilungsleitung bzw. ein gewissermaßen schubneutraler Gasverteiler realisieren.

Eine besonders Platz sparende Anordnung wird gemäß einer weiteren Ausführungsform der Erfindung erhalten, wenn ein Verteilerabschnitt des Gasgenerators verformbar ausgebildet ist und zwar derart, dass der Verteilerabschnitt unter dem Einfluss von mittels des Gasgenerators freigegebenem Gas aus einer flachen Montagekonfiguration in eine Aufblaskonfiguration mit gegenüber der Montagekonfiguration vergrößertem Strömungsquerschnitt gelangen kann. Insbesondere kann die Dynamik des aus dem Gasgenerator austretenden Gases genutzt werden, um ein bei der Herstellung zu Montagezwecken flach- bzw. zusammengedrücktes Rohrstück, das einen Bestandteil des Verteilerabschnitts bildet, wieder auseinander zu drücken bzw. zu "entfalten".

Wie der flexible Gasverteiler bzw. das gesamte Gasleitungssystem selbst nimmt bei dieser Ausgestaltung somit auch der Verteilerabschnitt des Gasgenerators nur dann relevanten Raum im Fahrzeug ein, wenn er auch tatsächlich benötigt wird.

Die Verbindung zwischen den einzelnen Komponenten, insbesondere zwischen der Gasleitung einerseits und dem Luftsack, dem Anschlussstück oder dem weiteren Gasleitungsstück andererseits, kann insbesondere nach Art einer Steck-/Schlitz-Verbindung ausgeführt sein. Insbesondere ist vorgesehen, dass die eine Komponente in ihrer Hülle oder Wandung mit einem Schlitz oder Einschnitt versehen ist, der mit einem Endabschnitt der anderen Komponente zusammenwirkt, wobei unter Endabschnitt ein mit einem offenen stirnseitigen Ende versehener Endbereich eines in der Aufblaskonfiguration eine schlauch- oder röhrenförmige Gestalt aufweisenden Verbindungsabschnitts verstanden wird.

Der Endabschnitt kann beispielsweise in den Schlitz der anderen Komponente eingesteckt werden. Hierbei ist vorzugsweise vorgesehen, dass der Endabschnitt mit wenigstens einer und insbesondere mit zwei einander gegenüberliegenden seitlichen Öffnungen insbesondere in Form von Schlitzen oder Einschnitten versehen ist, die vorzugsweise von dem offenen Ende des Endabschnitts ausgehen. Hierdurch wird der Endabschnitt gewissermaßen mit in Umfangsrichtung verteilt angeordneten Laschen versehen, die aufgrund der Flexibilität relativ zueinander bewegt und somit dazu verwendet werden können, den Endabschnitt an der Hülle oder Wandung des anderen Verbindungsabschnitts zu befestigen, beispielsweise durch Vernähen, Verkleben oder Verschweißen.

Es hat sich herausgestellt, dass bei entsprechender Dimensionierung insbesondere der Länge der Schlitze bzw. Einschnitte in den Verbindungsabschnitten eine zum Zwecke des Aufblasens eines oder mehrerer Luftsäcke vollkommen ausreichend gasdichte Verbindung zwischen den Verbindungsabschnitten erreicht werden kann, die insbesondere keine weiteren Abdichtmaßnahmen erfordert.

Die Erfindung wird im Folgenden beispielhaft unter Bezugnahme auf die Zeichnung beschrieben. Es zeigen:
- Fig. 1: gemäß einem Ausführungsbeispiel der Erfindung zwei flexible Verbindungsabschnitte in noch nicht miteinander verbundenem Zustand jeweils in einer flachen Montagekonfiguration,
- Fig. 2: in verschiedenen Ansichten die Verbindungsabschnitte von Fig. 1 im miteinander verbundenen Zustand, jedoch weiterhin in der flachen Montagekonfiguration,
- Fig. 3: eine perspektivische Ansicht der Verbindung von Fig. 2 in der Aufblaskonfiguration,
- Fig. 4: verschiedene Ansichten der Verbindung von Fig. 3, und
- Fig. 5: eine erfindungsgemäße Luftsackanordnung, die von einer erfindungsgemäßen Verbindung bzw. einem erfindungsgemäßen Gasverteiler zum gleichzeitigen Aufblasen zweier Luftsäcke mittels eines einzigen Gasgenerators Gebrauch macht.

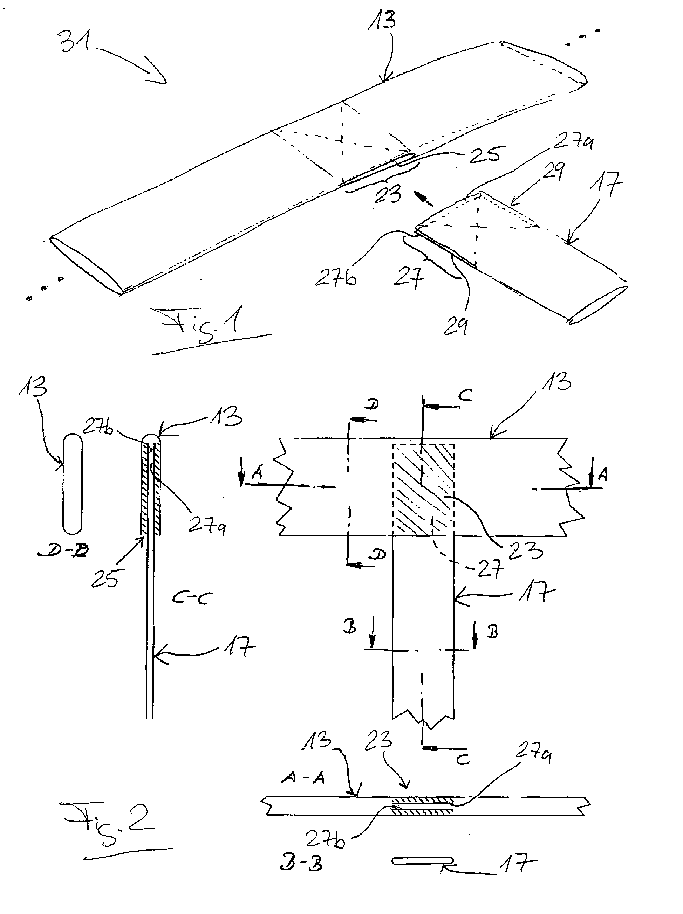

Die Fig. 1 bis 4 illustrieren die Erfindung am Beispiel eines flexiblen Gasverteilers 31, der von der erfindungsgemäßen Verbindung zwischen zwei flexiblen Verbindungsabschnitten 23, 27 zweier Komponenten einer Luftsackanordnung für Kraftfahrzeuge Gebrauch macht.

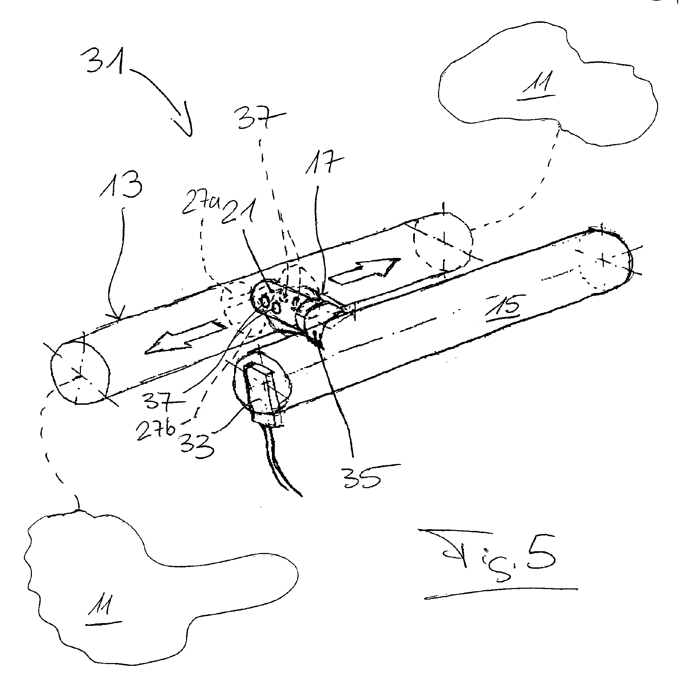

Bei der einen Komponente handelt es sich um eine lediglich teilweise dargestellte Gasleitung 13 z.B. in Form eines Gewebe- oder Textilschlauches, wobei die Gasleitung 13 auch von einem Schlauch oder einer Röhre aus einem ausreichend flexiblen, biegsamen oder weichen Kunststoffmaterial gebildet werden kann. Die andere Komponente 17 ist ebenfalls ein Gewebe-, Textil- oder Kunststoffschlauch, dessen Durchmesser demjenigen der Gasleitung 13 entsprechen oder von diesem abweichen kann. Die Komponente 17 wird im Folgenden auch als Anschlussstück bezeichnet, da sie für die Gasdichtigkeit des erfindungsgemäßen Gasverteilers 31 im Bereich der Anbindung eines Gasgenerators 15 (vgl. Fig. 5) an die Gasleitung 13 dient, worauf nachstehend näher eingegangen wird.

Die Hülle oder Wandung der Gasleitung 13 ist mit einer insbesondere durch Einschneiden hergestellten schlitzförmigen Öffnung 25 versehen, die sich hier parallel zu einer Längsachse der Gasleitung 13 erstreckt, wobei auch ein schräger oder senkrechter Verlauf des Schlitzes 25 möglich ist. Zur Herstellung der Verbindung wird in dem hier dargestellten Ausführungsbeispiel ein als Verbindungsabschnitt dienender Endabschnitt 27 des Anschlussstücks 17 in den Schlitz 25 eingeführt, was die in Fig. 2 dargestellte Anordnung zur Folge hat.

Die Länge des Schlitzes 25 ist auf die Breite des Anschlussstücks 17 im flachen, zusammengedrückten Montagezustand gemäß Fig. 1 abgestimmt. Der Endabschnitt 27 ist mit zwei einander gegenüberliegenden, vom offenen Ende des Endabschnitts 27 ausgehenden seitlichen Einschnitten 29 versehen. Durch diese geschlitzte Ausführung des Endabschnitts 27 entstehen zwei lappen- oder laschenartige Wandungsbereiche 27a, 27b. Die Länge der Einschnitte, Schlitze oder Öffnungen 29 des Endabschnitts 27, die hier parallel zur Längsachse des Anschlussstücks 17 verlaufen, wobei aber auch ein schräger oder senkrechter Verlauf möglich ist, ist auf die Breite des Leitungsabschnitts 13 im flachen Montagezustand gemäß Fig. 1 abgestimmt.

Die Schlitze können durch Einschneiden des Materials oder auch durch Materialwegnahme hergestellt werden.

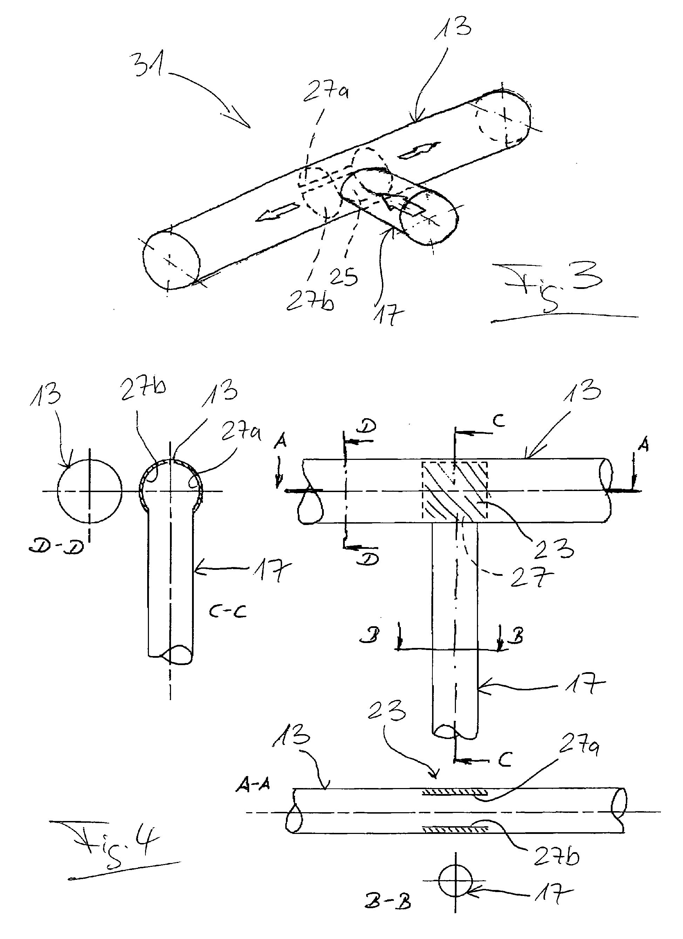

Die Laschen 27a, 27b dienen zur Befestigung des Endabschnitts 27 am Verbindungsabschnitt 23 der Gasleitung 13. Die Befestigung erfolgt beispielsweise durch Verkleben, Vernähen oder Verschleißen. In Fig. 2 und 4 sind z.B. Klebeflächen bzw. das verwendete Klebemittel durch Schraffuren angedeutet. Die Laschen 27a, 27b des Anschlussstücks 17 werden mit ihrer Außenseite an die Innenwand der Gasleitung 13 im Bereich des Verbindungsabschnitts 23 z.B. geklebt. Hierdurch wird eine mechanisch feste und - wie sich herausgestellt hat - ausreichend gasdichte Verbindung zwischen dem Anschlussstück 17 und der Gasleitung 13 erzielt.

Die auf diese Weise gebildete Verbindung bzw. der hierdurch gebildete Gasverteiler 31 erstreckt sich in der Montagekonfiguration gemäß Fig. 1 und 2 praktisch ausschließlich in einer Ebene. Aufgrund der flachen Konfiguration kann der Gasverteiler extrem Platz sparend in einem Fahrzeug verbaut und z.B. in den Fahrzeughimmel integriert werden.

Wird der Gasverteiler 31 von mittels des Gasgenerators 15 freigegebenem Gas durchströmt, gelangt er automatisch in die Aufblaskonfiguration gemäß Fig. 3 und 4, in der das Anschlussstück 17 und die Gasleitung 13 eine röhren- bzw. schlauchförmige Konfiguration einnehmen, die mit ausreichendem Strömungsquerschnitt einen Transport des Gases an einen jeweiligen Zielort ermöglichen. Die innenliegende Anordnung der Befestigungslaschen 27a, 27b hat den Vorteil, dass über das Anschlussstück 17 in die Gasleitung 13 einströmendes Gas an der Innenwand keinen sich in strömungstechnischer Hinsicht nachteilig auswirkenden Hindernissen ausgesetzt ist.

Alternativ zu der in den Fig. 1 bis 4 dargestellten Ausführungsform ist es auch möglich, die Gasleitung 13 mit den beiden Befestigungslaschen 27a, 27b außen zu umgreifen und die Laschen 27a, 27b auf der von dem Anschlussstück 17 abgewandten Seite der Gasleitung 13 beispielsweise durch Verkleben, Vernähen oder Verschweißen miteinander zu verbinden. Auch auf diese Weise lassen sich ein sicherer mechanischer Halt des Anschlussstücks 17 an der Gasleitung 13 sowie ein in strömungstechnischer Hinsicht optimales und gegenüber der Umgebung gasdichtes Kommunizieren zwischen dem Anschlussstück 17 und der Verbindungsöffnung 25 der Gasleitung 13 erzielen.

Fig. 5 zeigt den erfindungsgemäßen Gasverteiler 31 zusammen mit zwei schematisch angedeuteten Luftsäcken 11 und einem Gasgenerator 15, der dazu dient, im Bedarfsfall die beiden Luftsäcke 11 gleichzeitig aufzublasen.

Der die Gasleitung 13 bildende durchgehende flexible Schlauch verbindet die beiden Luftsäcke 11 miteinander. Die hier lediglich schematisch dargestellte Anbindung der Endabschnitte der Gasleitung 13 an die Luftsäcke 11 erfolgt vorzugsweise mittels der erfindungsgemäßen Verbindung, wie sie vorstehend anhand der Fig. 1 bis 4 erläutert ist. Dabei bilden die beiden jeweils mit einem Luftsack 11 verbundenen Enden der Gasleitung 13 jeweils einen Endabschnitt, wie er vorstehend in Verbindung mit den Anschlussstück 17 erwähnt ist, während eine schlitzförmige Öffnung entsprechend der vorstehend erwähnten Öffnung 25 jeweils in dem Luftsack 11 ausgebildet ist, um den betreffenden Endabschnitt der Gasleitung 13 aufnehmen zu können.

Insbesondere bei der Anbindung einer Gasleitung 13 an einen Luftsack 11 ergibt sich ein weiterer Vorteil der erfindungsgemäßen Verbindung. Es lässt sich auf besonders einfache Weise das Einblas- oder Aufblasverhalten des Luftsacks 11 dadurch beeinflussen, dass ein oder mehrere Parameter der Steck-/Schlitz-Verbindung variiert werden. So kann beispielsweise eingestellt werden, wie tief der Endabschnitt der Gasleitung 13 in den Luftsack 11 hineinragt. Des Weiteren kann der Winkel, unter welchem die Gasleitung 13 im Bereich ihres mit dem Luftsack 11 verbundenen Endes relativ zum Luftsack 11 verläuft, an die jeweiligen Gegebenheiten angepasst werden. Diejenige Stelle innerhalb des Luftsacks 11, an welcher das Gas aus dem Ende der Gasleitung 13 austritt, kann so praktisch beliebig innerhalb des Luftsacks 11 positioniert werden. Des Weiteren ist es möglich, das im Luftsack 11 befindliche Ende der Gasleitung 13 hinsichtlich des Austretens des Gases unterschiedlich auszugestalten. Beispielsweise kann das Ende der Gasleitung 13 stirnseitig geschlossen und seitlich mit ein oder mehreren, beispielsweise schlitzförmigen, Gasaustrittsöffnungen versehen sein. Hierdurch ergeben sich insgesamt vielfältige Variationsmöglichkeiten, um das Gasaustrittsverhalten zu beeinflussen.

Der Gasgenerator 15 weist einen einzigen Gasauslass auf, von dem ein als Diffusor ausgebildeter Verteilerabschnitt 21 ausgeht. Im Bereich seines Gasaustrittsendes ist der stirnseitig geschlossene Diffusor, insbesondere auf einander diametral gegenüberliegenden Seiten, jeweils mit einer Vielzahl von Gasaustrittsöffnungen 37 versehen, von denen hier der Einfachheit halber jeweils nur zwei dargestellt sind. Die Gasaustrittsöffnungen 37 sind derart ausgerichtet, dass im Ergebnis zwei einander entgegengerichtete Gasströme entstehen. Der Gasgenerator 15 ist hierdurch schubneutral ausgeführt, da nach dem Auslösen des Gasgenerators 15 das Gas aus dem Verteilerabschnitt 21 in einander entgegengesetzte Richtungen austritt.

Der Gasgenerator 15 ist mit seinem Verteilerabschnitt 21 derart in dem erfindungsgemäßen flexiblen Gasverteiler 31 angeordnet, dass die Gasaustrittsöffnungen 37 des Diffusors mit der Längsachse der Gasleitung 13 ausgerichtet sind.

Die Gasdichtigkeit der Anbindung des Gasgenerators 15 an die Gasleitung 13 wird durch das Anschlussstück 17 sichergestellt, das über den Verteilerabschnitt 21 gezogen ist und generatorseitig mittels einer Dichtschelle 35 gasdicht am Verteilerabschnitt 21 bzw. am Gasauslass des Gasgenerators 15 anliegt.

Das gleichzeitige Aufblasen der beiden Luftsäcke 11 erfolgt dadurch, dass im Bedarfsfall der bevorzugt als so genannter Kaltgasgenerator ausgebildete Gasgenerator 15 mit einem Auslösesignal beaufschlagt wird, was über einen elektrischen Anschluss 33 erfolgt. Hierdurch wird ein innerhalb des Gasgenerators 15 befindlicher Treibsatz gezündet, mit letztlich eine vorhandene, unter hohem Druck stehende Gasmenge freigibt, so dass das Gas schlagartig über den Gasauslass und den Diffusor 21 durch die Gasaustrittsöffnungen 37 nach außen strömt. Über die Gasleitung 13 wird hierbei somit beiden Luftsäcken 11 gleichzeitig das mittels des Gasgenerators 15 freigegebene Gas zugeführt. Die beiden Luftsäcke 11 sind also gerade nicht an verschiedene Gasauslässe eines Gasgenerators angeschlossen, die unabhängig voneinander und insbesondere zeitlich nacheinander mit Gas beaufschlagt werden können. Vielmehr zeichnet sich die erfindungsgemäße Luftsackanordnung hier dadurch aus, dass mit einem einzigen Treibsatz und einer einzigen "Gasladung", d.h. somit gewissermaßen "auf einen Schlag", beide Luftsäcke 11 gleichzeitig mit Gas gefüllt werden. Der Einsatz reiner pyrotechnischer Gasgeneratoren oder so genannter Hybrid-Gasgeneratoren ist erfindungsgemäß ebenfalls möglich. Die Verwendung von Kaltgas, das z.B. Helium umfasst, wird als vorteilhaft insofern angesehen, als durch Hitzeeinwirkung bedingte Nachteile vermieden werden und ein besseres dynamisches Verhalten hinsichtlich der Gasströmung erzielt werden kann.

In einer alternativen Ausgestaltung der Erfindung ist es auch möglich, dass ein einziger, mittels eines einzigen Auslösesignals über den Anschluss 33 zündbarer Treibsatz ein Gasvolumen freigegeben, das gleichzeitig über zwei oder mehrere Gasauslässe aus dem Gasgenerator 15 austritt und durch entsprechende Ausbildung einer gemeinsamen oder geteilten Diffusoranordnung gleichzeitig zwei an eine gemeinsame oder jeweils an eine eigene Gasleitung angeschlossene Luftsäcke 11 aufbläst. Auch eine solche Ausgestaltung im Rahmen dieser Anmeldung als ein gemeinsamer oder einziger Gasauslass des Gasgenerators im Sinne der Erfindung angesehen, da ein Aspekt der Erfindung das gleichzeitige Aufblasen zweier oder mehrerer Luftsäcke ist.

Wie im Einleitungsteil erwähnt, kann auch der Verteilerabschnitt bzw. Diffusor 21 und insbesondere der gesamte innerhalb des erfindungsgemäßen flexiblen Verteilers 31 befindliche Abschnitt des Gasgenerators 15 derart verformbar ausgebildet sein, dass nach dem Auslösen des Gasgenerators 15 das ausströmende Gas den insbesondere aus Metall bestehenden Diffusor 21 bzw. den erwähnten gesamten Abschnitt aus einer Platz sparenden zusammengedrückten Einbaukonfiguration in eine Aufblaskonfiguration mit vergrößertem Strömungsquerschnitt überführt, gewissermaßen also entfaltet oder aufdrückt. Mit Ausnahme des Gasgenerators 15 selbst ist somit das gesamte Gasleitungssystem aus Diffusor 21, Anschlussstück 17 und Gasleitung 13 im Ausgangszustand von flächiger Gestalt, was den Platzbedarf innerhalb des Fahrzeugs minimiert.

Besonders vorteilhaft ist die Erfindung in Luftsackanordnungen einsetzbar, die zwei räumlich getrennt anzuordnende Seiten- oder "Roof-Rail"-Airbags aufweisen, welche jeweils im Ausgangszustand im Bereich des Übergangs zwischen Fahrzeugdach und Fahrzeugseitenwand angeordnet sind und sich vorhangartig nach unten entfalten können, um für die Insassen einen sich über eine relevante Länge der Fahrzeugs erstreckenden Seitenschutz zu bilden. Derartige Seitenairbags werden derzeit jeweils mit einem eigenen Gasgenerator versehen, was relativ hohe Herstellungskosten bedeutet und außerdem deshalb als störend empfunden wird, da der Gasgenerator im Bereich des Übergangs zwischen Fahrzeugdach und Fahrzeugseitenwand in den meisten Fällen nur so montiert werden kann, dass er in das Fahrzeuginnere hineinragt.

Da mit der Erfindung ein flach bauendes, im Montagezustand nicht auftragendes Gasleitungssystem realisierbar ist, kann in dem hier geschilderten Anwendungsfall eine Anordnung beispielsweise gemäß Fig. 5 mit einem einzigen Gasgenerator vorgesehen werden, der über eine Gasleitung gleichzeitig beide Seitenairbags versorgt. Die im Montagezustand flache Gasleitung kann einfach in den Fahrzeughimmel integriert und somit am Fahrzeugdach entlang geführt werden. Für den Gasgenerator kann in diesem Fall eine bezüglich der Fahrzeugquerrichtung mittige Anordnung beispielsweise an einem hinteren Querträger vorgesehen werden. Dieser Einbauort ermöglicht es, ein Hineinragen des Gasgenerators in den Fahrzeugraum zu vermeiden. Die Reduzierung auf lediglich einen Gasgenerator und damit lediglich eine Anschlusselektrik und Auslöseelektronik führt zu einer erheblichen Senkung der Herstellungskosten.

Ein Aspekt der Erfindung, der auch unabhängig beansprucht wird, ist die Anordnung eines Verteilerabschnitts in einem Gasleitungssystem, wobei der Verteilerabschnitt an den Gasauslass eines Gasgenerators anschließbar oder angeschlossen ist und über den das Gas gleichzeitig in wenigstens zwei unterschiedliche, insbesondere einander entgegengesetzte, Richtungen strömen kann. Bei dem Gasleitungssystem kann es sich einfach um eine, insbesondere durchgehende und/oder einstückige, Gasleitung handeln, die insbesondere flexibel, biegsam und/oder weich ausgebildet sein kann, um aus der flachen Montagekonfiguration in die Aufblaskonfiguration gelangen zu können. Insofern ist das vorstehend beschriebene Anschlussstück 17 für die Gasverteilung an sich nicht zwingend erforderlich. Das Anschlussstück 17 kann jedoch auf besonders einfache und zuverlässige Weise für die Gasdichtigkeit der Gasleitung sorgen, wobei diese prinzipiell aber auch auf andere Art und Weise ohne das Anschlussstück 17 gewährleistet werden kann.

### Bezugszeichenliste

- 11: Luftsack
- 13: Gasleitung
- 15: Gasgenerator
- 17: Anschlussstück
- 21: Verteilerabschnitt, Diffusor
- 23: Verbindungsabschnitt der Gasleitung, Zwischenabschnitt
- 25: Öffnung, Schlitz
- 27: Verbindungsabschnitt des Anschlussstücks, Endabschnitt
- 27a: Wandungsbereich, Befestigungslasche
- 27b: Wandungsbereich, Befestigungslasche
- 29: seitliche Öffnung, Schlitz
- 31: Gasverteiler
- 33: elektrischer Anschluss
- 35: Dichtschelle
- 37: Gasaustrittsöffnung

## Patentansprüche

1. Luftsackanordnung für Kraftfahrzeuge mit
wenigstens einem aufblasbaren Luftsack (11) und
zumindest einer Gasleitung (13), an die der Luftsack (11) angeschlossen und über die der Luftsack (11) mittels eines im am Fahrzeug montierten Zustand entfernt von dem Luftsack (11) angeordneten Gasgenerators (15) aufblasbar ist,
wobei zwischen der Gasleitung (13) und wenigstens einer weiteren Komponente, die von dem Luftsack (11), einem Anschlussstück (17) oder einem weiteren Gasleitungsstück gebildet ist, eine gasdichte Verbindung besteht, die von einem Verbindungsabschnitt (23) der Gasleitung (13) und einem Verbindungsabschnitt (27) der weiteren Komponente gebildet ist,
wobei die Verbindungsabschnitte (23, 27) jeweils derart, insbesondere flexibel, biegsam und/oder weich, ausgebildet sind, dass sie unter dem Einfluss von mittels des Gasgenerators (15) freigegebenem Gas aus einer flachen Montagekonfiguration in eine Aufblaskonfiguration mit gegenüber der Montagekonfiguration vergrößertem Strömungsquerschnitt gelangen können.

2. Luftsackanordnung nach Anspruch 1,
**dadurch gekennzeichnet,**
**dass** zumindest ein Verbindungsabschnitt (23, 27) von einem Schlauch gebildet ist.

3. Luftsackanordnung nach Anspruch 1 oder 2,
**dadurch gekennzeichnet,**
**dass** die Gasleitung (13), das Anschlussstück (17) und/oder das weitere Gasleitungsstück im Wesentlichen vollständig von einem Schlauch gebildet sind.

4. Luftsackanordnung nach einem der vorhergehenden Ansprüche,
**dadurch gekennzeichnet,**
**dass** zumindest ein Verbindungsabschnitt (23, 27) aus einem Gewebe- oder Textilmaterial oder einem, insbesondere flexiblen, biegsamen oder weichen, Kunststoffmaterial hergestellt ist.

5. Luftsackanordnung nach einem der vorhergehenden Ansprüche,
**dadurch gekennzeichnet,**
**dass** zumindest ein Verbindungsabschnitt (23, 27) aus dem gleichen Material wie die Hülle des Luftsacks (11) oder aus einem gleichartigen Material hergestellt ist.

6. Luftsackanordnung nach einem der vorhergehenden Ansprüche,
**dadurch gekennzeichnet,**
**dass** die Verbindung ausschließlich von den flexiblen Verbindungsabschnitten (23, 27) gebildet ist.

7. Luftsackanordnung nach einem der vorhergehenden Ansprüche,
**dadurch gekennzeichnet,**
**dass** die Verbindung als Gasverteiler (31) oder als Bestandteil eines Gasverteilers (31) ausgebildet ist, der eine Anzahl von Eingängen aufweist, die kleiner ist als die Anzahl von Ausgängen.

8. Luftsackanordnung nach Anspruch 7,
**dadurch gekennzeichnet,**
**dass** an die Gasleitung (13) wenigstens zwei im am Fahrzeug montierten Zustand entfernt voneinander angeordnete Luftsäcke (11) angeschlossen sind, die über den Gasverteiler (31) mittels des Gasgenerators (15), insbesondere gleichzeitig, aufblasbar sind.

9. Luftsackanordnung nach einem der vorhergehenden Ansprüche,
**dadurch gekennzeichnet,**
**dass** die Gasleitung (13) die beiden Luftsäcke (11) miteinander verbindet und in einem Zwischenabschnitt (23) an den Gasgenerator (15) angeschlossen ist.

10. Luftsackanordnung nach einem der vorhergehenden Ansprüche,
**dadurch gekennzeichnet,**
**dass** die Luftsäcke (11) an einen gemeinsamen Gasauslass des Gasgenerators (15) angeschlossen sind.

11. Luftsackanordnung nach einem der Ansprüche 7 bis 10,
**dadurch gekennzeichnet,**
**dass** der Gasverteiler (31) eingangsseitig an einen einzigen Gasauslass des Gasgenerators (15) angeschlossen ist.

12. Luftsackanordnung nach einem der vorhergehenden Ansprüche,
**dadurch gekennzeichnet,**
**dass** der Gasgenerator (15) schubneutral ausgeführt ist.

13. Luftsackanordnung nach einem der Ansprüche 7 bis 12,
**dadurch gekennzeichnet,**
**dass** der Gasgenerator (15) einen, insbesondere als Diffusor ausgebildeten, Verteilerabschnitt (21) umfasst, über den das Gas gleichzeitig in wenigstens zwei unterschiedliche, insbesondere einander entgegengesetzte, Richtungen strömen kann, wobei der Verteilerabschnitt (21) des Gasgenerators (15) in dem Gasverteiler (31) angeordnet ist.

14. Luftsackanordnung nach Anspruch 13,
**dadurch gekennzeichnet,**
**dass** der Verteilerabschnitt (21) des Gasgenerators (15) derart verformbar ist, dass er unter dem Einfluss von mittels des Gasgenerators (15) freigegebenem Gas aus einer flachen Montagekonfiguration in eine Aufblaskonfiguration mit gegenüber der Montagekonfiguration vergrößertem Strömungsquerschnitt gelangen kann.

15. Luftsackanordnung nach Anspruch 13 oder 14,
**dadurch gekennzeichnet,**
**dass** der Verteilerabschnitt (21) des Gasgenerators (15) in der Gasleitung (13) angeordnet ist, wobei vorzugsweise die Gasleitung (13) und der Gasgenerator (15) mittels des Anschlussstücks (17) gasdicht miteinander verbunden sind.

16. Luftsackanordnung nach einem der vorhergehenden Ansprüche,
**dadurch gekennzeichnet,**
**dass** die Verbindung T- oder Y-förmig ausgebildet ist.

17. Luftsackanordnung nach einem der vorhergehenden Ansprüche,
**dadurch gekennzeichnet,**
**dass** die Verbindung von einem ein offenes Ende aufweisenden Endabschnitt (27), insbesondere des Anschlussstücks (17), und einem durchgehenden Zwischenabschnitt (23), insbesondere der Gasleitung (13), gebildet ist.

18. Luftsackanordnung nach einem der vorhergehenden Ansprüche,
**dadurch gekennzeichnet,**
**dass** die Verbindungsabschnitte (23, 27) mit Bereichen ihrer Wandungen einander überlappen, wobei vorzugsweise die Verbindungsabschnitte (23, 27) über die Bereiche ihrer Wandungen miteinander verbunden sind, insbesondere durch Verkleben, Vernähen und/oder Verschweißen.

19. Luftsackanordnung nach einem der vorhergehenden Ansprüche,
**dadurch gekennzeichnet,**
**dass** die Verbindungsabschnitte (23, 27) zusammengesteckt sind.

20. Luftsackanordnung nach einem der vorhergehenden Ansprüche,
**dadurch gekennzeichnet,**
**dass** die Wandung des einen Verbindungsabschnitts (23) mit wenigstens einer Öffnung (25) für den anderen Verbindungsabschnitt (27) versehen ist, wobei vorzugsweise die Öffnung (25) als Schlitz ausgebildet ist.

21. Luftsackanordnung nach einem der vorhergehenden Ansprüche,
**dadurch gekennzeichnet,**
**dass** ein Verbindungsabschnitt als ein offenes Ende aufweisender Endabschnitt (27) ausgebildet ist, dessen Wandung mit wenigstens einer seitlichen Öffnung (29) versehen ist.

22. Luftsackanordnung nach Anspruch 21,
**dadurch gekennzeichnet,**
**dass** die seitliche Öffnung (29) als, insbesondere vom offenen Ende des Endabschnitts (27) ausgehender, Schlitz ausgebildet ist.

23. Luftsackanordnung nach Anspruch 21 oder 22,
**dadurch gekennzeichnet,**
**dass** die Wandung des Endabschnitts (27) mit wenigstens zwei einander gegenüberliegenden seitlichen Öffnungen (29) versehen ist.

24. Luftsackanordnung nach einem der Ansprüche 21 bis 23,
**dadurch gekennzeichnet,**
**dass** der Endabschnitt (27) in die Öffnung (25) des anderen Verbindungsabschnitts (23) gesteckt ist.

25. Luftsackanordnung nach einem der Ansprüche 21 bis 23,
**dadurch gekennzeichnet,**
**dass** der Endabschnitt (27) auf den anderen Verbindungsabschnitt (23) gesteckt ist.

26. Luftsackanordnung nach Anspruch 24 oder 25,
**dadurch gekennzeichnet,**
**dass** der andere Verbindungsabschnitt von einem durchgehenden Zwischenabschnitt (23), insbesondere der Gasleitung (13), gebildet ist, wobei die seitliche Öffnung (29) des Endabschnitts (27) mit der Längsachse des Zwischenabschnitts (23) und/oder die Öffnung (25) des Zwischenabschnitts (23) mit der Längsachse des Endabschnitts (27) ausgerichtet ist.

27. Luftsackanordnung nach Anspruch 25 oder 26,
**dadurch gekennzeichnet,**
**dass** der Endabschnitt (27) wenigstens zwei Wandungsbereiche (27a, 27b) aufweist, die den anderen Verbindungsabschnitt (23) ausgehend von dessen einen Seite außen umfassen und auf der gegenüberliegenden Seite miteinander verbunden sind.

28. Luftsackanordnung für Kraftfahrzeuge, insbesondere nach einem der vorhergehenden Ansprüche, mit
wenigstens zwei im am Fahrzeug montierten Zustand entfernt voneinander angeordneten Luftsäcken (11), und
mindestens einem Gasgenerator (15) zum gleichzeitigen Aufblasen der Luftsäcke (11),
wobei die Luftsäcke (11) an einen gemeinsamen Gasauslass des Gasgenerators (15) angeschlossen sind.

29. Luftsackanordnung nach Anspruch 28,
**dadurch gekennzeichnet,**
**dass** der Gasgenerator (15) einen, insbesondere als Diffusor ausgebildeten, Verteilerabschnitt (21) umfasst, über den das Gas gleichzeitig in wenigstens zwei unterschiedliche, insbesondere einander entgegengesetzte, Richtungen strömen kann, wobei der Verteilerabschnitt (21) des Gasgenerators (15) in einem Gasleitungssystem (13) angeordnet ist, an das die beiden Luftsäcke (11) angeschlossen sind,
wobei das Gasleitungssystem (13) derart, insbesondere flexibel, biegsam und/oder weich, ausgebildet ist, dass es unter dem Einfluss von mittels des Gasgenerators (15) freigegebenem Gas aus einer flachen Montagekonfiguration in eine Aufblaskonfiguration mit gegenüber der Montagekonfiguration vergrößertem Strömungsquerschnitt gelangen kann.

30. Luftsackanordnung nach Anspruch 29,
**dadurch gekennzeichnet,**
**dass** der Verteilerabschnitt (21) des Gasgenerators (15) in einer, insbesondere durchgehenden und/oder einstückigen, Gasleitung (13) angeordnet ist, welche die beiden Luftsäcke (11) miteinander verbindet.

31. Luftsackanordnung nach einem der Ansprüche 28 bis 30,
**dadurch gekennzeichnet,**
**dass** ein Gasleitungssystem mit den Merkmalen eines der Ansprüche 32 bis 34 vorgesehen ist.

32. Gasleitungssystem für eine Kraftfahrzeug-Luftsackanordnung, insbesondere nach einem der vorhergehenden Ansprüche, mit
wenigstens einem Gasverteiler (13, 31), der zumindest zwei Ausgänge, an die zwei im am Fahrzeug montierten Zustand entfernt voneinander angeordnete Luftsäcke (11) anschließbar sind, und wenigstens einen Eingang aufweist, der an einen Gasgenerator (15) zum gleichzeitigen Aufblasen der Luftsäcke (11) anschließbar ist,
wobei der Gasverteiler (13, 31) derart, insbesondere flexibel, biegsam und/ oder weich, ausgebildet ist, dass er unter dem Einfluss von mittels des Gasgenerators (15) freigegebenem Gas aus einer flachen Montagekonfiguration in eine Aufblaskonfiguration mit gegenüber der Montagekonfiguration vergrößertem Strömungsquerschnitt gelangen kann.

33. Gasleitungssystem nach Anspruch 32,
**dadurch gekennzeichnet,**
**dass** der Gasverteiler einen, insbesondere als Diffusor ausgebildeten, Verteilerabschnitt (21) umfasst, der an einen Gasauslass des Gasgenerators (15) anschließbar oder mit einem Gasauslass des Gasgenerators (15) verbunden ist und über den von dem Gasgenerator (15) freigegebenes Gas gleichzeitig in wenigstens zwei unterschiedliche, insbesondere einander entgegengesetzte, Richtungen strömen kann.

34. Gasleitungssystem nach Anspruch 33,
**dadurch gekennzeichnet,**
**dass** der Gasverteiler eine durchgehende Gasleitung (13) umfasst,
mit der die beiden Luftsäcke (11) miteinander verbindbar sind, wobei der Verteilerabschnitt (21) des Gasgenerators (15) in der Gasleitung (13) angeordnet ist.
